# EUROPÄISCHE PATENTANMELDUNG

(11) **EP 3 385 069 A1**
(43) Veröffentlichungstag der Anmeldung: **10.10.2018**
(21) Anmeldenummer: 17164504.7
(22) Anmeldetag: 03.04.2017
(51) Int. Cl.: B32B 5/02, B32B 5/08, B32B 5/22, B32B 5/24, B32B 5/26, B32B 7/02, B32B 19/02, B32B 19/04, B32B 19/06, B32B 27/12, B32B 27/28, B32B 27/32, B32B 27/34, B32B 38/00, B32B 1/00, B32B 3/00, B32B 37/04

(54) **VERFAHREN ZUR HERSTELLUNG EINES FLÄCHIGEN VERBUNDBAUTEILS UND DAMIT HERGESTELLTES VERBUNDBAUTEIL**

(71) Anmelder: Quadrant Plastic Composites AG, 5600 Lenzburg 1 (CH)
(72) Erfinder: Die Erfindernennung liegt noch nicht vor
(74) Vertreter: Schmauder & Partner AG Patent- & Markenanwälte VSP

(57) **Zusammenfassung**

Ein Verfahren zur Herstellung eines flächigen Verbundbauteils mit einer zwischen zwei Deckschichten (A, A') angeordneten und stoffschlüssig damit verbundenen Kernschicht (B), wobei mindestens eine Deckschicht (A) einen Deckschicht-Thermoplasten enthält und wobei die Kernschicht (B) einen Kernschicht-Thermoplasten enthält, umfasst die folgenden Schritte:
a) es wird ein aufgeheizter Stapel der Schichtenfolge A-B-A' bereitgestellt;
b) der aufgeheizte Stapel (A-B-A') wird verpresst;
c) der verpresste Stapel wird abgekühlt, wobei das flächige Verbundbauteil mit konsolidierten und stoffschlüssig miteinander verbundenen Schichten gebildet wird.

Zur Erweiterung des Anwendungsbereiches einschliesslich der Herstellung von flächigen 3D-Bauteilen wird vorgeschlgen, dass
- mindestens eine der Deckschichten (A, A') in unkonsolidierter Form eine Faservliesschicht aus 10 bis 100 Gew.% Thermoplastfasern des Deckschicht-Thermoplasten und 0 bis 90 Gew.% Verstärkungsfasern mit einem Flächengewicht von 300 bis 3'000 g/m² umfasst;
- die Kernschicht (B) in unkonsolidierter Form mindestens eine aus Verstärkungsfasern und Thermoplastfasern des Kernschicht-Thermoplasten gebildete Wirrfaservliesschicht (D) umfasst,
und dass
- nach dem Verpressen die konsolidierte(n) Deckschicht(en) einen Luftporengehalt < 5 Vol.-% und die konsolidierte Kernschicht einen Luftporengehalt von 20 bis 80 Vol-% aufweisen.

## Beschreibung

### Technisches Gebiet

Die vorliegende Erfindung betrifft ein Verfahren zur Herstellung eines flächigen Verbundbauteils mit einer zwischen zwei Deckschichten angeordneten und stoffschlüssig damit verbundenen Kernschicht. Des Weiteren betrifft die Erfindung ein mit dem erfindungsgemässen Verfahren hergestelltes flächiges Verbundbauteil sowie eine Verwendung desselben.

### Stand der Technik

Verbundbauteile aus faserverstärkten Thermoplasten werden in zunehmendem Mass als Formteile in verschiedenen Bereichen der Technik eingesetzt.

Beispielsweise beschreibt die WO 2015/117799A1 ein Verbundbauteil mit einem Schaumkern, auf dessen Oberfläche beidseitig eine stoffschlüssig mit dem Schaumkern verbundene Deckschicht angeordnet ist. Zur Herstellung des Verbundbauteils werden die Deckschichten und der Schaumkern erwärmt, danach werden die Deckschichten auf den Oberflächen des Schaumkerns positioniert und das Ganze in eine Presse oder Form gebracht, die das fertige Verbundbauteil abbildet. Das Erwärmen kann auch erst in der Form erfolgen. Anschliessend werden Schaumkern und Deckschichten umgeformt und nach einer bestimmten Umformzeit wieder abgekühlt, wobei eine stoffschlüssige Verbindung zwischen Schaumkern und Deckschichten gebildet wird. Als Deckschichten werden einerseits metallische Deckschichten, insbesondere aus Aluminium beschrieben. Alternativ werden auch Deckschichten aus faserverstärktem Kunststoff beschrieben. Dadurch, dass während des Umformschrittes die Deckschichten auf den Oberflächen des Schaumkerns verschoben werden können, erweist sich das beschriebene Verfahren insbesondere für die Herstellung nicht-planarer Verbundbauteile mit komplexer Form als vorteilhaft.

Ein gattungsgemässes Verbundbauteil ist in der WO 2006/133586 A1 beschrieben. Diese betrifft eine biegesteife Verbundplatte, umfassend:
A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. eine Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%.

Die dabei verwendete Kernschicht wird durch trockenes Vermischen von Polypropylenfasern und Glasfasern, Vernadeln des Mischvlieses und Heissverpressen hergestellt. Zur Bildung der Verbundplatte werden die einzelnen Schichten diskontinuierlich in einer Presse bei Temperaturen zwischen 180 und 220 °C während 5 bis 50 min verpresst. Die beschriebenen Verbundplatten werden insbesondere als Trennwände und Schalungselemente im Bauwesen, aber auch im Möbelbau als Ersatz für Spanplatten eingesetzt.

Nach wie vor besteht ein erheblicher Bedarf für weitere, insbesondere auch biegesteife, flächige Verbundbauteile bzw. für entsprechende Herstellungsverfahren. Insbesondere sind Verbundbauteile erwünscht, deren Eigenschaften für bestimmte Anwendungen deutlich verbessert sind.

### Darstellung der Erfindung

Eine Aufgabe der Erfindung ist es demnach, ein Verfahren zur Herstellung eines flächigen Verbundbauteils anzugeben. Eine weitere Aufgabe der Erfindung besteht in der Bereitstellung eines entsprechenden Verbundbauteils sowie in der Angabe von Verwendungszwecken desselben.

Gelöst werden diese Aufgaben durch das im Anspruch 1 definierte Herstellungsverfahren sowie durch das im Anspruch 13 definierte flächige Verbundbauteil und die im Anspruch 15 definierten Verwendungen desselben.

Vorteilhafte Ausgestaltungen der Erfindung sind nachfolgend beschrieben und in den abhängigen Ansprüchen definiert.

Das erfindungsgemässe Verfahren zur Herstellung eines flächigen Verbundbauteils mit einer zwischen zwei Deckschichten (A, A') angeordneten und stoffschlüssig damit verbundenen Kernschicht (B), wobei mindestens eine Deckschicht (A) einen Deckschicht-Thermoplasten enthält und wobei die Kernschicht (B) einen Kernschicht-Thermoplasten enthält, umfasst die folgenden Schritte:
a) ausgehend von entsprechenden Zuschnitten der beiden Deckschichten und der Kernschicht in unkonsolidierter Form wird ein aufgeheizter Stapel der Schichtenfolge A-B-A' bereitgestellt;
b) der aufgeheizte Stapel (A-B-A') wird verpresst;
c) der verpresste Stapel wird abgekühlt, wobei das flächige Verbundbauteil mit konsolidierten und stoffschlüssig miteinander verbundenen Schichten gebildet wird.
Dadurch, dass
- mindestens eine der Deckschichten (A, A') in unkonsolidierter Form eine Faservliesschicht aus 10 bis 100 Gew.% Thermoplastfasern des Deckschicht-Thermoplasten und 0 bis 90 Gew.% Verstärkungsfasern mit einem Flächengewicht von 300 bis 3'000 g/m² umfasst, und
- die Kernschicht (B) in unkonsolidierter Form mindestens eine aus Verstärkungsfasern und Thermoplastfasern des Kernschicht-Thermoplasten gebildete Wirrfaservliesschicht (D) umfasst,
und dass
- nach dem Verpressen die konsolidierte(n) Deckschicht(en) einen Luftporengehalt < 5 Vol.-% und die konsolidierte Kernschicht einen Luftporengehalt von 20 bis 80 Vol-% aufweisen
ergeben sich aus dem erfindungsgemässen Verfahren verschiedene Vorteile.

Insbesondere erlaubt das erfindungsgemässe Verfahren auch die Herstellung von spezifisch geformten, nicht-ebenen flächigen Bauteilen (auch "3D-Bauteile" genannt). Durch die hohe Drapierbarkeit der Kernschicht mit Wirrfaservlies können zudem hohe Umformgrade erzielt werden

Darüber hinaus lässt sich das erfindungsgemässe Verfahren in prozessökonomischer Weise, d.h. mit vorteilhaft kurzer Prozessdauer und/oder mit vergleichsweise geringem Energiebedarf, implementieren.

Die erfindungsgemässen flächigen Verbundbauteile werden aufgrund ihrer Schichtanordnung auch als "Sandwich-Bauteile" bezeichnet. Solche Bauteile können als ebene oder gebogene Platten, aber auch als Bauteile mit unterschiedlichen Dicken und Verformungsgraden ausgebildet sein.

Der Begriff "entsprechende Zuschnitte" ist im vorliegenden Zusammenhang hinsichtlich der Abmessungen des herzustellenden Verbundbauteils zu verstehen. Ein "entsprechender Zuschnitt" des Materials für eine der Deckschichten wird also im Wesentlichen die Länge und Breite des Verbundbauteils aufweisen. Bei einem "entsprechenden Zuschnitt" des Materials für die Kernschicht wird dies ebenfalls zutreffen, wobei allerdings noch die in gewissen Ausführungsformen vorgesehenen zusätzlichen Strukturschichten zu berücksichtigen bzw. bereits mit einzulegen sind.

Der Begriff "konsolidiert" ist im Zusammenhang mit dem erfindungsgemäss vorgesehenen Verpressungsschritt zu sehen. Demnach ist "konsolidiert" nicht zwangsläufig als "vollkonsolidiert" bzw. "porenlos" zu verstehen, sondern als Zustand, der sich infolge des Verpressens in heissem Zustand ergibt.

Demgegenüber ist der Begriff "in unkonsolidierter Form" als Referenzzustand für die Ausgangsmaterialien zu verstehen, in welchem noch keine wesentliche Bildung einer Thermoplastmatrix stattgefunden hat.

Die Begriffe "Deckschicht-Thermoplast" und "Kernschicht-Thermoplast" sind grundsätzlich als Angabe desjenigen Thermoplasten zu verstehen, aus dem die in den betreffenden Schichten vorhandenen Thermoplastfasern gebildet sind. Dies setzt nicht zwangsläufig voraus, dass die Thermoplastfasern in einer gegebenen Schicht nur aus einem Thermoplastmaterial gebildet sein müssen. Insbesondere können auch Mischfasern aus unterschiedlichen, aber kompatiblen Thermoplasten zum Einsatz kommen. Als "kompatibel" werden Thermoplasten verstanden, die eine stoffschlüssige Verbindung erlauben.

Es versteht sich, dass im Hinblick auf das Verpressen gemäss Schritt b) der Begriff "aufgeheizt" dahingehend zu verstehen ist, dass eine zur thermoplastischen Umformung geeignete Temperatur vorliegt. Demnach sollen also alle zur Umformung vorgesehenen Thermoplastbereiche auf einer etwas oberhalb der jeweiligen Thermoplast-Schmelztemperatur aufgeheizt werden.

Je nach verwendetem Thermoplastmaterial erfolgt das Verpressen bei Temperaturen im Bereich von ca. 180ºC (beispielsweise bei Verwendung von Polypropylen) bis ca. 400ºC (beispielsweise bei Verwendung von PEEK) und bei Drücken von 0.5 bis 5 bar. Die Verarbeitung erfolgt variotherm (aufheizen und pressen im gleichen Werkzeug) oder durch vorgängiges aufheizen im Kontakt, IR- bzw. Umluftofen und anschliessendem Pressen im Werkzeug

Erfindungsgemäss umfasst der im Schritt b) gebildete aufgeheizte Stapel (A-B-A') eine noch nicht konsolidierte Kernschicht (B), wohingegen die Deckschichten (A. A') je nach Ausführungsform bereits einen gewissen Konsolidierungsgrad aufweisen können.

Erfindungsgemäss umfasst mindestens eine der Deckschichten (A, A') in unkonsolidierter Form eine Faservliesschicht aus 10 bis 100 Gew.% Thermoplastfasern des Deckschicht-Thermoplasten und 0 bis 90 Gew.% Verstärkungsfasern mit einem Flächengewicht von 300 bis 3'000 g/m². Sofern dies nur für eine der beiden Schichten A und A' zutrifft, wird diese ohne Einschränkung der Allgemeinheit als die Schicht A definiert.

Im Gegensatz zu den bei der WO 2015/117799 A1 verwendeten Schaumkernen umfasst die erfindungsgemässe Kernschicht (B) in unkonsolidierter Form mindestens eine aus Verstärkungsfasern und Thermoplastfasern gebildete Wirrfaservliesschicht (D). Derartige Schichten werden auch als "Nonwovens" bezeichnet.

Weiterhin ist erfindungsgemäss vorgesehen, dass nach dem Verpressen die konsolidierte(n) Deckschicht(en) einen Luftporengehalt < 5 Vol.-% und die konsolidierte Kernschicht einen Luftporengehalt von 20 bis 80 Vol-% aufweisen. Damit ergeben sich Bauteile mit einer widerstandsfähigen, vergleichsweise harten und steifen Aussenschicht und einer voluminösen, schall- und wärmeisolierenden Innenschicht mit vergleichsweise geringer Dichte. Dementsprechend sind die Bauteile für eine gegebene Steifheit vergleichsweise leicht.

Die oben erwähnte Struktur ergibt sich in wesentlichem Mass dadurch, dass beim Verpressen des zuvor bereitgestellten aufgeheizten Stapels der Konsolidierungsvorgang anfänglich vornehmlich in den randnahen Schichten A und ggf. A' abläuft, während im Bereich der Kernschicht aufgrund von Rückstellkräften der Wirrfaserschicht eine weniger weitgehende Konsolidierung stattfindet.

Im verpressten Bauteil haben die Deckschichten eine Dicke von 0.1 mm bis 10mm, während die Kernschichte eine Dicke von 0.5mm bis 50mm aufweist. Die Deckschichten und Kernschichten aus Nonwovens haben vorzugsweise die gleiche bzw. kompatible Matrix, so dass die Haftung stoffschlüssig und ohne zusätzlichen Klebefolien bzw. Kleber erfolgt.

Die in der Kernschicht verwendeten Wirrfaservliesschichten aus Thermoplastfasern als Matrix und optional Verstärkungsfasern haben den Vorteil, dass sie flexibel sind und eine erheblich grössere Dicke (4x bis 8x, ggf. sogar bis 10x) als die finale Dicke im verpressten Bauteil haben können. Bei der Sandwichherstellung werden die Kernschichten aus Nonwovens auf die finale Dicke komprimiert. Im Gegensatz zu Schaumstoffen besteht beim erfindungsgemässen Verfahren kein Risiko, dass der Kern aus Nonwoven unter Temperatur- und Druckbeaufschlagung kollabiert und dadurch die erforderlichen Dicken nicht erzielt werden können. Dies wird dadurch erreicht, dass die Verstärkungsfasern der Nonwovens beim Pressvorgang unter Druck und Temperatur einen Widerstand in z-Richtung (d.h. senkrecht zur Schichtebene) ausüben, der sich als "Expansionskraft" äussert. Durch die ständig vorhandene "Expansionskraft" während des gesamten Pressvorgangs können Dicken bis zu 4x Fache der vollkonsolidierten Dicke (ohne zu kollabieren) erreicht werden.

Bei einer vorteilhaften Ausführungsform (Anspruch 2) ist die im Schritt a) bereitgestellte, unkonsolidierte Kernschicht (B) genadelt. Dadurch wird der fachsprachlich auch als "Loft" bezeichnete Rückstelleffekt in z-Richtung noch verstärkt. Dabei können die Expansionskräfte der Fasern je nach Fasergehalt, Faserlänge und Vernadelungsparameter beeinflusst werden.

Grundsätzlich steht für das erfindungsgemässe Verfahren, eine ganze Reihe von erprobten Thermoplasten zur Verfügung, deren Auswahl im Bereich des Fachwissens liegt. Gemäss einer vorteilhaften Ausführungsform (Anspruch 3) sind der Deckschicht-Thermoplast und der Kernschicht-Thermoplast unabhängig ausgewählt aus Polypropylen (PP), Polyetherimid (PEI), Polyetheretherketon (PEEK), Polyphenylensulfid (PPS), Polyamid (PA), Polyaryletherketon (PAEK) und Polyetherketonketon (PEKK).

Auch für die Auswahl der Verstärkungsfasern steht eine ganze Reihe von erprobten Fasermaterialien zur Verfügung. Gemäss einer vorteilhaften Ausführungsform (Anspruch 4) sind die Verstärkungsfasern ausgewählt aus Carbonfasern, Glasfasern, Aramidfasern, Basaltfasern und hochschmelzenden Thermoplastfasern. Unter dem Begriff "hochschmelzende Thermoplastfasern" sind Fasern aus einem Thermoplasten mit einem oberhalb der im erfindungsgemässen Heiz- und Pressvorgang verwendeten Arbeitstemperaturen liegenden Schmelzpunkt.

Es versteht sich, dass die Auswahl der Thermoplasten wie auch der Fasermaterialien, und entsprechend auch die Kombination von Thermoplast und Fasermaterial stark durch den Anwendungsbereich des herzustellenden Bauteils geprägt sind.

Gemäss einer vorteilhaften Ausführungsform des Verfahrens (Anspruch 5) werden im Schritt a) die Zuschnitte der beiden Deckschichten (A, A') und der Kernschicht (B) in unkonsolidierter Form mit der Schichtenfolge A-B-A' aufeinandergestapelt und der so gebildete Stapel (A-B-A') auf eine Temperatur oberhalb der Schmelztemperatur sowohl des Deckschicht-Thermoplasten wie auch des Kernschicht-Thermoplasten aufgeheizt. Bei dieser Ausführungsform wird also ausgehend von kalten Zuschnitten zunächst der Stapel A-B-A' aufgebaut und gesamthaft aufgeheizt. Anschliessend wird der aufgeheizte Stapel im Schritt b) in einem Presswerkzeug verpresst und im Schritt c) abgekühlt. Die Form des Presswerkzeugs wird je nach gewünschter Form des herzustellenden Bauteils gewählt. Für diese Ausführungsform sollten der Deckschicht-Thermoplast und der Kernschicht-Thermoplast miteinander kompatibel sein, damit deren thermoplastische Verformung in einem geeigneten Temperaturbereich gleichzeitig möglich ist. Zur Durchführung des Verfahrens kann beispielsweise eine kombinierte Heiz-, Press- und Kühlstation verwendet werden (sog. Variotherm-Prozess). Es ist aber auch möglich, den Aufheizprozess in einer eigenständigen Kontakt-Heizstation durchzuführen und das anschliessende Pressen und Kühlen in einer nachgelagerten Pressvorrichtung.

Gemäss einer vorteilhaften Weiterbildung dieses Verfahrens (Anspruch 6) sind der Deckschicht-Thermoplast und der Kernschicht-Thermoplast identisch. Dadurch lässt sich die Haftung der einzelnen Schichten aneinander stoffschlüssig und ohne zusätzliche Klebefolien bzw. Kleber bewerkstelligen.

Eine seit langem bewährte, kostengünstige und verlässliche Materialkombination beruht auf Polypropylen als Thermoplast und Glas als Material der Verstärkungsfasern. Als höherwertige Materialkombination mit mechanisch hervorragenden Eigenschaften und vergleichsweise geringem Gewicht bietet sich PEEK als Thermoplast und Carbonfasern als Material der Verstärkungsfasern. Carbonfasern bieten auch den Vorteil einer stärkeren Rückstellkraft, d.h. eines stärkeren Loft-Effektes, was die Herstellung von Bauteilen mit hoch porösen Kernschichten begünstigt.

Gemäss einer anderen vorteilhaften Ausführungsform des Verfahrens (Anspruch 7) werden im Schritt a) die Zuschnitte der Kernschicht (B) sowie der mindestens einen Deckschicht (A) unabhängig voneinander auf eine Temperatur oberhalb der Schmelztemperatur des betreffenden Thermoplasten aufgeheizt werden und danach in aufgeheizter Form mit der Schichtenfolge A-B-A' aufeinandergestapelt werden. Auch in diesem Fall wird ein aufgeheizter Stapel (A-B-A') mit unkosolidierter Kernschicht (B) gebildet. Aufgrund der unabhängigen Aufheizvorgänge können die verschiedenen Schichten auf unterschiedliche Temperaturen aufgeheizt werden, was insbesondere bei Verwendung unterschiedlicher Kernschicht-und Deckschicht-Thermoplasten erforderlich sein kann.

Es versteht sich, dass bei sämtlichen Ausführungsformen das Verpressen des aufgeheizten Stapels zeitnah durchgeführt werden muss, d.h. es darf keine vorzeitige Erstarrung des Thermoplasten stattfinden. Dementsprechend ist es bei der zuletzt genannten Ausführungsform bevorzugt, für das unabhängige Aufheizen der Deckschichten und der Kernschicht eigene Heizstationen vorzusehen, um einen Parallelbetrieb zu ermöglichen.

Gemäss einer vorteilhaften Ausführungsform (Anspruch 8) weist die mindestens eine Deckschicht (A) in unkonsolidierter Form eine mit der Faservliesschicht (C) vernadelte, vernähte oder thermisch verbundene Gewebe- oder Gelegeschicht (E) aus Verstärkungsfasern mit einem Flächengewicht von 100 bis 2'000 g/m² auf.

Derartige Schichtstoffe sind in der WO 2006/111037 A1 beschrieben worden und sind beispielsweise unter der Bezeichnung "Q-Tex" bekannt.. Gemäss einer vorteilhaften Weiterbildung dieses Verfahrens (Anspruch 9) weist die mindestens eine Deckschicht (A) mehrere Gewebe- oder Gelegeschichten (E1, E2, etc.) aus unterschiedlichen Verstärkungsfasermaterialien auf. Beispielsweise kann eine erste Schicht mit Carbonfasern, eine zweite Schicht mit Aramidfasern und eine dritte Schicht mit Glasfasern ausgestattet sein. Die Deckschichten können auch aus mehreren Lagen mit unterschiedlicher Orientierung aufgebaut sein, um einen belastungsgerechten Aufbau bezüglich Steifigkeit und Duktilität zu erzielen. Beispielsweise kann je ein Glasfaser Gelege mit Orientierung +45° bzw. +45° und eine weitere Lage mit unidirektionalen Glasfasern vorgesehen werden.

Gemäss einer weiteren vorteilhaften Ausführungsform (Anspruch 10) weist die Kernschicht (B) in unkonsolidierter Form mindestens eine weitere, an die Wirrfaservliesschicht (D) angrenzende Strukturschicht (F) auf, wobei es sich insbesondere um eine weitere Wirrfaservliesschicht mit unterschiedlichem Verstärkungsfaseranteil oder aber um eine Bienenwaben- oder Schaumstoffschicht handeln kann. In manchen Ausführungsvarianten ist die Strukturschicht aus einem Thermoplasten, insbesondere aus dem Kernschicht-Thermoplasten gebildet. Gemäss einer Weiterbildung (Anspruch 11) ist die Strukturschicht (F) nur in ausgewählten Regionen der Kernschicht vorgesehen. In anderen Ausführungsformen werden Strukturschichten aus Materialien mit höherem Schmelzpunkt wie beispielsweise Aluminium oder Nomex® verwendet.

Mit den vorgenannten Massnahmen, die einzelnen oder in Kombination implementierbar sind, lässt sich eine erhebliche, massgeschneiderte Variation der lokalen Eigenschaften des Bauteils erreichen.

Gemäss einer vorteilhaften Ausführungsform des Verfahrens (Anspruch 12) wird das Verpressen des aufgeheizten Stapels in einem nicht-planaren Presswerkzeug durchgeführt. Damit lassen sich 3-dimensional strukturierte flächige Verbundbauteile unterschiedlichster Art herstellen.

Ein weiterer Aspekt der Erfindung (Anspruch 13) betrifft generell ein flächiges Verbundbauteil mit einer zwischen zwei Deckschichten (A, A') angeordneten und stoffschlüssig damit verbundenen Kernschicht (B), wobei das Verbundbauteil mit dem erfindungsgemässen Verfahren hergestellt ist. Gemäss einer vorteilhaften Ausgestaltung (Anspruch 14) wird als Deckschicht-Thermoplast und als Kernschicht-Thermoplast übereinstimmend PEEK verwendet, und bei den Verstärkungsfasern handelt es sich um Carbonfasern, wobei die Deckschichten (A, A') eine Dichte von 1.0 bis 1.8 g/cm³, insbesondere von 1.4 bis 1.6 g/cm³, aufweisen und die Kernschicht (B) eine Dichte von 0.2 bis 1.0 g/cm³, insbesondere von 0.3 bis 0.6 g/cm³, aufweist.

Die erfindungsgemässen flächigen Verbundteile haben mannigfache Anwendungsbereiche. Gemäss einem Aspekt der Erfindung (Anspruch 15) werden die erfindungsgemässen Verbundteile in der Luftfahrt oder im Fahrzeugbau verwendet.

### Kurze Beschreibung der Zeichnungen

Ausführungsbeispiele der Erfindung werden nachfolgend anhand der Zeichnungen näher beschrieben, dabei zeigen:
- Fig. 1: ein erstes flächiges Verbundbauteil, in schematischer, perspektivischer Darstellung;
- Fig. 2: eine Ausgestaltung einer unkonsolidierten Decklage, in einer schematischen Schnittdarstellung;
- Fig. 3: ein zweites flächiges Verbundbauteil, in schematischer, perspektivischer Darstellung;
- Fig. 4: ein drittes flächiges Verbundbauteil, in schematischer, perspektivischer Darstellung;
- Fig. 5: ein viertes flächiges Verbundbauteil, in schematischer, perspektivischer Darstellung;
- Fig. 6: eine kombinierte Heiz-, Press- und Kühlvorrichtung zur Verarbeitung eines Schichtstapels, in schematischer, perspektivischer Darstellung;
- Fig. 7: eine Vorrichtung mit Heizstation und nachgelagerter Press- und Kühlvorrichtung zur Verarbeitung eines Schichtstapels, in schematischer, perspektivischer Darstellung; und
- Fig. 8: eine Vorrichtung mit separaten Heizstationen für einzelne Schichten und einer nachgelagerten Press- und Kühlvorrichtung zur Verarbeitung eines Schichtstapels, in schematischer, perspektivischer Darstellung.

### Wege zur Ausführung der Erfindung

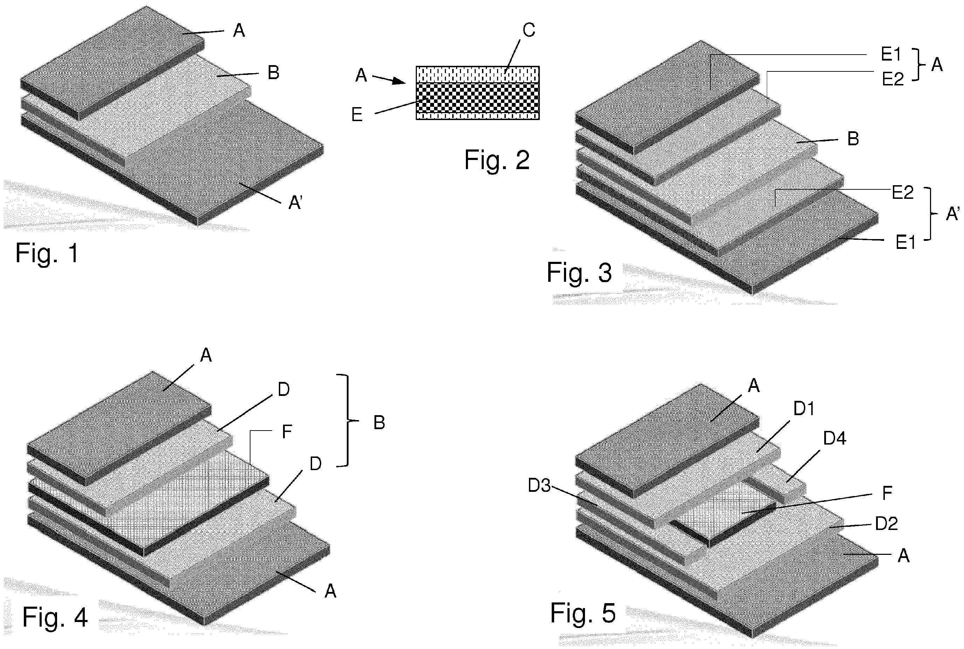

Die in den Fig. 1 bis 5 dargestellten flächigen Verbundbauteile sind lediglich zur Verdeutlichung der Schichtenstruktur mit in Längsrichtung versetzten Schichten dargestellt. Demgegenüber sind bei der praktischen Verwendung die einzelnen Schichtkanten in aller Regel bündig. Ferner sollen die Fig. 1 bis 5 lediglich die grundsätzliche Schichtenstruktur und nicht die relativen Dicken der Schichten darstellen. Dementsprechend sind die in den Fig. 1 bis 5 gezeigten Anordnungen grundsätzlich sowohl für die jeweils bereitgestellten Schichtenstapel wie auch für die nach dem Pressvorgang entstandenen Verbundbauteile zutreffend.

Das in der Fig. 1 dargestellte Verbundbauteil weist eine zwischen zwei Deckschichten A und A' angeordnete Kernschicht B auf.

Eine mögliche Ausgestaltung der Deckschicht A ist in der Fig. 2 veranschaulicht. Diese umfasst eine Faservliesschicht C sowie eine damit vernadelte Gewebeschicht E aus Verstärkungsfasern. Eine solche Schicht kann beispielsweise durch Aneinanderlegen der Schichten C und E hergestellt werden, wobei beim Nadeln ein Teil der Vliesfasern C durch die Verstärkungsfaserschicht E hindurchgestossen wird. Dementsprechend ist die Verstärkungsfaserschicht E auf beiden Seiten von Vliesfasern C umgeben.

Bei dem in der Fig. 3 dargestellten Verbundbauteil ist jede der beiden Deckschichten A und A' aus zwei Gewebeschichten E1 und E2 mit unterschiedlichen Verstärkungsfasermaterialien gebildet.

Bei dem in der Fig. 4 dargestellten Verbundbauteil weist die Kernschicht B in unkonsolidierter Form beidseitig eine im Inneren der Wirrfaservliesschicht D angeordnete Strukturschicht F in Form einer Bienenwabenpatte bzw. einer Wirrfaserschicht mit unterschiedlichem Verstärkungsfaseranteil auf. Im gezeigten Beispiel ist die Strukturschicht vollflächig ausgebildet und ist demnach sandwichartig zwischen zwei Wirrfaserschichten eingebettet.

Bei dem in der Fig. 5 dargestellten Verbundbauteil ist die Strukturschicht F nur in ausgewählten Regionen der Kernschicht B vorhanden. Wie aus der Fig. 5 ersichtlich, ist im gezeigten Beispiel des Strukturschicht F als mittiger Streifen im Inneren der Kernschicht B angeordnet und ist zwischen je einer oberen und unteren Wirrfaservliesschicht D1 und D2 und zwischen je einer seitlichen Wirrfaservliesschicht D3 und D4 eingebettet.

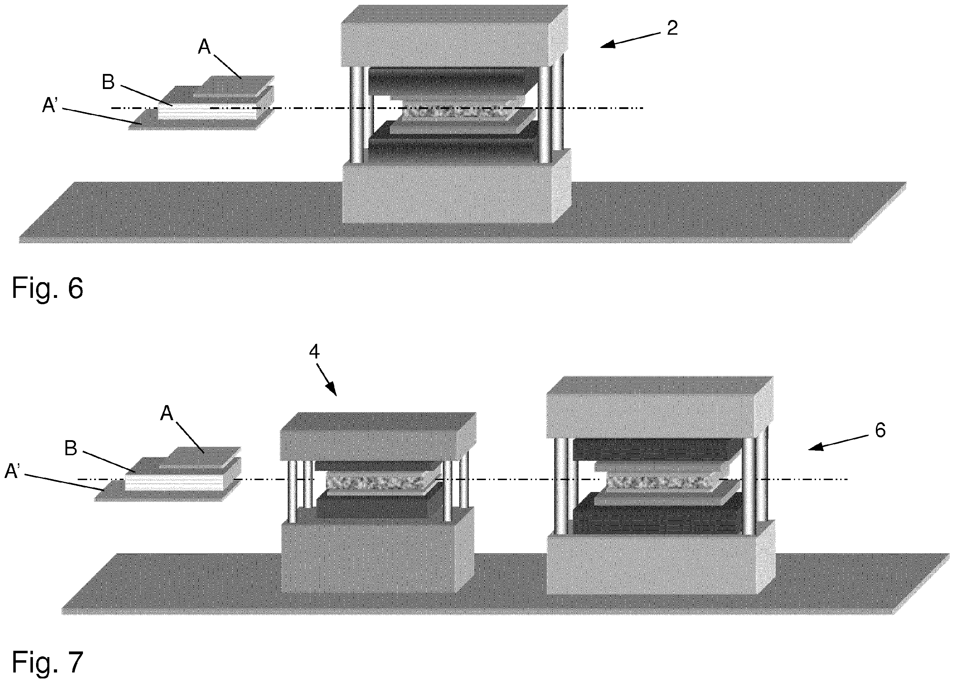

Bei einer Ausführungsform des Herstellungsverfahrens wird wie in der Fig. 6 veranschaulicht ein vorgängig bereitgestellter kalter Schichtstapel A-B-A' in eine kombinierte Heiz-, Press- und Kühlvorrichtung 2 eingeführt und dort aufgeheizt und zu einem flächigen Verbundbauteil verpresst.

Bei einer weiteren Ausführungsform wird wie in der Fig. 7 veranschaulicht ein vorgängig bereitgestellter kalter Schichtstapel A-B-A' in eine Kontakt-Heizvorrichtung 4 eingeführt und dort aufgeheizt. Der so gebildete aufgeheizte Schichtstapel wird anschliessend in einer Pressvorrichtung 6 zu einem flächigen Verbundbauteil verpresst.

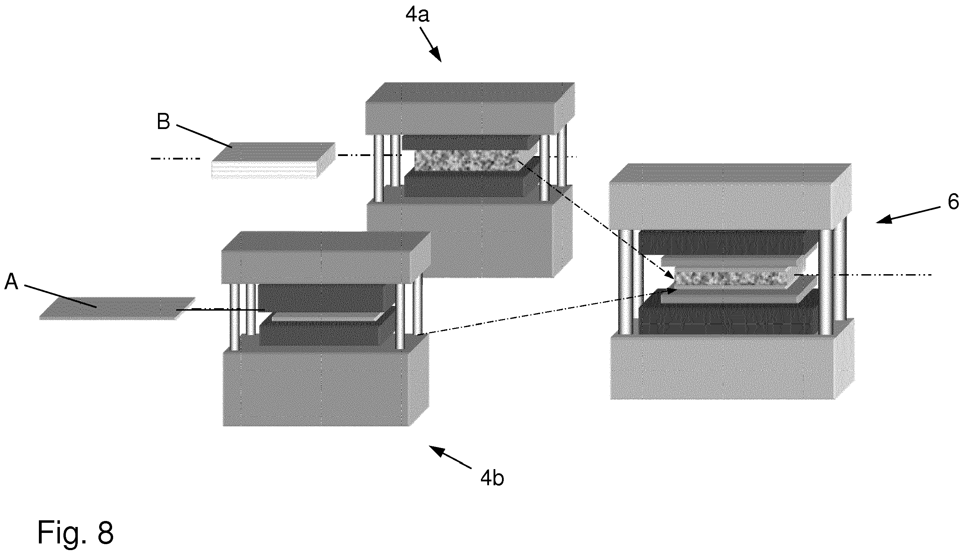

Bei noch einer weiteren Ausführungsform wird wie in der Fig. 8 veranschaulicht eine Kernschicht B in nicht-konsolidierter Form, welche im gezeigten Beispiel aus mehreren Lagen besteht, in eine erste Heizvorrichtung 4a eingeführt und dort aufgeheizt. Im Wesentlichen gleichzeitig wird eine Deckschicht A in unkonsolidierter Form in eine zweite Heizvorrichtung 4b eingeführt und dort ebenfalls aufgeheizt. Eine weitere, nicht dargestellte Deckschicht A' wird entweder in einer dritten Heizvorrichtung oder unmittelbar anschliessend in der zweiten Heizvorrichtung 4b ebenfalls aufgeheizt. Aus den so gebildeten aufgeheizten Deck- und Kernschichten wird ein heisser Stapel A-B-A' gebildet, der anschliessend in der Pressvorrichtung 6 zu einem flächigen Verbundbauteil verpresst wird. Durch die Verwendung separater Heizvorrichtungen können für die Kernschicht B einerseits und für die Deckschichten A und A' andererseits unterschiedliche Aufheiztemperaturen verwendet werden. Dies erlaubt die Verwendung unterschiedlicher Thermoplastmaterialien in der Kernschicht und in den Deckschichten.

## Patentansprüche

1. Verfahren zur Herstellung eines flächigen Verbundbauteils mit einer zwischen zwei Deckschichten (A, A') angeordneten und stoffschlüssig damit verbundenen Kernschicht (B), wobei mindestens eine Deckschicht (A) einen Deckschicht-Thermoplasten enthält und wobei die Kernschicht (B) einen Kernschicht-Thermoplasten enthält, und wobei das Verfahren die folgenden Schritte umfasst:
a) ausgehend von entsprechenden Zuschnitten der beiden Deckschichten und der Kernschicht in unkonsolidierter Form wird ein aufgeheizter Stapel der Schichtenfolge A-B-A' bereitgestellt;
b) der aufgeheizte Stapel (A-B-A') wird verpresst;
c) der verpresste Stapel wird abgekühlt, wobei das flächige Verbundbauteil mit konsolidierten und stoffschlüssig miteinander verbundenen Schichten gebildet wird;
**dadurch gekennzeichnet, dass**
- mindestens eine der Deckschichten (A, A') in unkonsolidierter Form eine Faservliesschicht aus 10 bis 100 Gew.% Thermoplastfasern des Deckschicht-Thermoplasten und 0 bis 90 Gew.% Verstärkungsfasern mit einem Flächengewicht von 300 bis 3'000 g/m² umfasst;
- die Kernschicht (B) in unkonsolidierter Form mindestens eine aus Verstärkungsfasern und Thermoplastfasern des Kernschicht-Thermoplasten gebildete Wirrfaservliesschicht (D) umfasst,
und dass
- nach dem Verpressen die konsolidierte(n) Deckschicht(en) einen Luftporengehalt < 5 Vol.-% und die konsolidierte Kernschicht einen Luftporengehalt von 20 bis 80 Vol-% aufweisen.

2. Verfahren nach Anspruch 1, wobei die im Schritt a) bereitgestellte, unkonsolidierte Kernschicht (B) genadelt ist.

3. Verfahren nach Anspruch 1, wobei der Deckschicht-Thermoplast und der Kernschicht-Thermoplast unabhängig ausgewählt sind aus PP, PEI, PEEK, PPS, PA, PEAK und PEKK.

4. Verfahren nach Anspruch 1 oder 2, wobei die Verstärkungsfasern ausgewählt sind aus Carbonfasern, Glasfasern, Aramidfasern, Basaltfasern und hochschmelzenden Thermoplastfasern.

5. Verfahren nach einem der Ansprüche 1 bis 4, wobei im Schritt a) die Zuschnitte der beiden Deckschichten (A, A') und der Kernschicht (B) in unkonsolidierter Form mit der Schichtenfolge A-B-A' aufeinandergestapelt werden und der so gebildete Stapel (A-B-A') auf eine Temperatur oberhalb der Schmelztemperatur sowohl des Deckschicht-Thermoplasten wie auch des Kernschicht-Thermoplasten aufgeheizt wird.

6. Verfahren nach Anspruch 5, wobei der Deckschicht-Thermoplast und der Kernschicht-Thermoplast identisch sind.

7. Verfahren nach einem der Ansprüche 1 bis 4, wobei im Schritt a) die Zuschnitte der Kernschicht (B) sowie der mindestens einen Deckschicht (A) unabhängig voneinander auf eine Temperatur oberhalb der Schmelztemperatur des betreffenden Thermoplasten aufgeheizt werden und danach in aufgeheizter Form mit der Schichtenfolge A-B-A' aufeinandergestapelt werden, wobei ein aufgeheizter Stapel (A-B-A') mit unkonsolidierter Kernschicht (B) gebildet wird.

8. Verfahren nach einem der Ansprüche 1 bis 7, wobei die mindestens eine Deckschicht (A) in unkonsolidierter Form eine mit der Faservliesschicht (C) vernadelte, vernähte oder thermisch verbundene Gewebe- oder Gelegeschicht (E) aus Verstärkungsfasern mit einem Flächengewicht von 100 bis 2'000 g/m² aufweist.

9. Verfahren nach Anspruch 8, wobei die mindestens eine Deckschicht (A) mehrere Gewebe- oder Gelegeschichten (E1, E2, etc.) aus unterschiedlichen Verstärkungsfasermaterialien aufweist.

10. Verfahren nach einem der Ansprüche 1 bis 9, wobei die Kernschicht (B) in unkonsolidierter Form mindestens eine weitere, an die Wirrfaservliesschicht (D) angrenzende Strukturschicht (F), insbesondere eine weitere Wirrfaservliesschicht mit unterschiedlichem Verstärkungsfaseranteil oder eine Bienenwaben- oder Schaumstoffschicht, aufweist.

11. Verfahren nach Anspruch 10, wobei die Strukturschicht (F) nur in ausgewählten Regionen der Kernschicht vorgesehen ist.

12. Verfahren nach einem der Ansprüche 1 bis 11, wobei das Verpressen des aufgeheizten Stapels (A-B-A') in einem nicht-planaren Presswerkzeug durchgeführt wird.

13. Flächiges Verbundbauteil mit einer zwischen zwei Deckschichten (A, A') angeordneten und stoffschlüssig damit verbundenen Kernschicht (B), wobei das Verbundbauteil mit einem Verfahren nach einem der vorhergehenden Ansprüche hergestellt ist.

14. Flächiges Verbundbauteil nach Anspruch 13, wobei der Deckschicht-Thermoplast und der Kernschicht-Thermoplast PEEK sind und wobei die Verstärkungsfasern Carbonfasern sind, und wobei die Deckschichten (A, A') eine Dichte von 1.0 bis 1.8 g/cm³, insbesondere von 1.4 bis 1.6 g/cm³, aufweisen und die Kernschicht (B) eine Dichte von 0.2 bis 1.0 g/cm³, insbesondere von 0.3 bis 0.6 g/cm³, aufweist.

15. Verwendung eines flächigen Verbundbauteils nach einem der vorangehenden Ansprüche in der Luftfahrt oder im Fahrzeugbau.
